# EUROPEAN PATENT APPLICATION

(11) **EP 2 881 855 A1**
(43) Date of publication of application: **10.06.2015**
(21) Application number: 14178079.1
(22) Date of filing: 22.07.2014
(51) Int. Cl.: G06F 9/44, H04N 5/445

(54) **Display apparatus and method for controlling the same**

(30) Priority: 06.12.2013 KR 20130151294
(71) Applicant: Samsung Electronics Co., Ltd, Gyeonggi-do 443-742 (KR)
(72) Inventor: Han, Ji-youn, Gyeonggi-do (KR); Suh, Ji-woo, Seoul (KR)
(74) Representative: Taor, Simon Edward William

(57) **Abstract**

A display apparatus includes a display configured to display a thumbnail image that indicates a corresponding content group; a user interface configured to receive a user command; and a controller configured to control the display to successively display thumbnails that represent a plurality of pieces of content belonging to the corresponding content group, when a graphical user interface (GUI) is positioned on the thumbnail image.

## Description

Apparatuses and methods consistent with exemplary embodiments relate to a display apparatus and a method for controlling the same, and more particularly to a display apparatus and a method for controlling the same, which can successively display thumbnails that indicate a plurality of pieces of content.

Recently, with the development of technologies, display devices that adopt various new functions have been released. That is, televisions (TVs), which have various functions and prominent performance in comparison to older TVs, have been released, and further, TVs combined with wire/wireless communications have been developed. Accordingly, users can view content through such TVs and also can enjoy various kinds of content, applications, or high-quality images through combination with peripheral devices, the Internet, or the like. Examples of the TVs that provide such various functions include a digital TV (DTV), an Internet Protocol TV (IPTV), and a smart TV.

According to trends to add various complicated functions to the TVs, a great number of functions needs to be included on a display screen, i.e., displayed on a constrained area. As a result, it may be difficult and cumbersome for the users to use these complicated functions and/or select content.

For example, in the related art TV, when many pieces of content need to be displayed, the content is classified and displayed according to a tree structure. Accordingly, to retrieve content desired by a user, the user needs to perform successive retrieval through making selections from an upper folder to a lower folder. In addition, the user needs to make an operation in order to shift the screen from the currently displayed page to the next page, and this introduces even more inconvenience for the user in retrieving the content.

Exemplary embodiments may address at least the above problems and/or disadvantages and other disadvantages not described above. Also, the exemplary embodiments are not required to overcome the disadvantages described above, and an exemplary embodiment may not overcome any of the problems described above.

One or more exemplary embodiments provide a display apparatus and a method for controlling the same, which can successively display thumbnails that correspond to a plurality of pieces of content belonging to a corresponding content group when a selected graphical user interface (GUI) is positioned on the thumbnail.

According to an aspect of an exemplary embodiment, a display apparatus includes a display configured to display at least one thumbnail that indicates at least one content group; a user interface configured to receive a user command; and a controller configured to operate to successively display thumbnails that indicate a plurality of pieces of content belonging to the corresponding content group when a selected GUI is positioned on one of the at least one thumbnail according to the user command.

If one of the thumbnails that indicate the content belonging to the content group is selected while the thumbnails are successively displayed, the controller may operate to automatically execute the content that corresponds to the selected thumbnail.

The controller may operate to display a plurality of GUIs that indicate a plurality of categories on one side of a screen, and if one of the plurality of GUIs is selected, the controller may operate to display the thumbnails that indicate the content groups belonging to the category that corresponds to the selected GUI.

The plurality of categories may include Social Network Service (SNS) categories.

If the selected GUI is positioned on the thumbnail according to the user command, the controller may operate to successively display the thumbnails that indicate the content belonging to the corresponding content group according to a predetermined order.

The predetermined order may be at least one of an update time of the content and preference for the content.

The controller may operate to display the at least one thumbnail that indicates the at least one content group together with content information that corresponds to the corresponding thumbnail.

The thumbnail that indicates the content group may be a representative thumbnail that indicates a common attribute of the content belonging to the corresponding content group.

According to an aspect of an exemplary embodiment, a method for controlling a display apparatus includes displaying at least one thumbnail that indicates at least one content group; receiving a user command; and successively displaying thumbnails that indicate a plurality of pieces of content belonging to the corresponding content group when a selected GUI is positioned on one of the at least one thumbnail according to the user command.

The method for controlling a display apparatus according to the aspect of the present disclosure may further include if one of the thumbnails that indicate the content belonging to the content group is selected while the thumbnails are successively displayed, automatically executing the content that corresponds to the selected thumbnail.

The method for controlling a display apparatus according to the aspect of the present disclosure may further include displaying a plurality of GUIs that indicate a plurality of categories on one side of a screen; and if one of the plurality of GUIs is selected, displaying the thumbnails that indicate the content groups belonging to the category that corresponds to the selected GUI.

The plurality of categories may include SNS categories.

The sequentially displaying the thumbnails may include if the selected GUI is positioned on the thumbnail according to the user command, successively displaying the thumbnails that indicate the content belonging to the corresponding content group according to a predetermined order.

The predetermined order may be at least one of an update time of the content and preference for the content.

The displaying the at least one thumbnail may include displaying the at least one thumbnail that indicates the at least one content group together with content information that corresponds to the corresponding thumbnail.

The thumbnail that indicates the content group may be a representative thumbnail that indicates a common attribute of the content belonging to the corresponding content group.

According to an aspect of an exemplary embodiment, a display apparatus includes: a display; a user interface; and a processor configured to successively arrange displaying of content thumbnails which each represents different content items of a same content group by: receiving a selection of a content category, displaying representative thumbnails which respectively represent the content items belonging to different content groups of a same content category that has been selected, receiving a selection of one of the representative thumbnails, and controlling a successive display of the content thumbnails, which correspond to a selected representative thumbnail, each content thumbnail representing the content items different from one another and belonging to the same content group.

The display is configured to display a first GUI indicating content categories different from one another, on a first area of the display, a selection of the content category is received through the first GUI, and the representative thumbnails are displayed on a second area of the display, in response to receiving the selection of the content category through the first GUI.

The display is further configured to display a second GUI on the selected representative thumbnail, in response to receiving the selection of the content category through the first GUI, and the processor is configured to successively arrange displaying the content thumbnails in a sliding manner, in response to receiving the selection of the one of the representative thumbnails through the second GUI.

The processor is further configured to position a third GUI on the selected representative thumbnail and each next one of the successively displayed content thumbnails, after an expiration of a timer associated with each instance of a display of the third GUI at a certain position, and to start reproducing the content items, in response to receiving a selection of the third GUI positioned at the certain position prior to the expiration of the timer, corresponding to the selected representative thumbnail or each next one of the successively displayed content thumbnails.

According to one or more exemplary embodiments, various content categories and pieces of content are displayed on one screen, and thus quick and convenient content retrieval can be achieved.

The above and/or other aspects will become more apparent by describing certain exemplary embodiments, with reference to the accompanying drawings, in which:
FIG. 1 is an exemplary block diagram of a display apparatus according to an exemplary embodiment;
FIG. 2 is an exemplary diagram of a display screen according to an exemplary embodiment;
FIGS. 3A, 3B, and 3C are exemplary diagrams of a display screen according to an exemplary embodiment;
FIG. 4 is an exemplary diagram of a display screen according to an exemplary embodiment;
FIGS. 5, 6, and 7 are exemplary diagrams of a display screen according to an exemplary embodiment;
FIG. 8 is an exemplary flowchart illustrating a method for controlling a display apparatus according to an exemplary embodiment; and
FIG. 9 is an exemplary block diagram of a display apparatus according to an exemplary embodiment.

Certain exemplary embodiments are described in greater detail below with reference to the accompanying drawings.

In the following description, the same drawing reference numerals are used for the same elements even in different drawings. The matters defined in the description, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

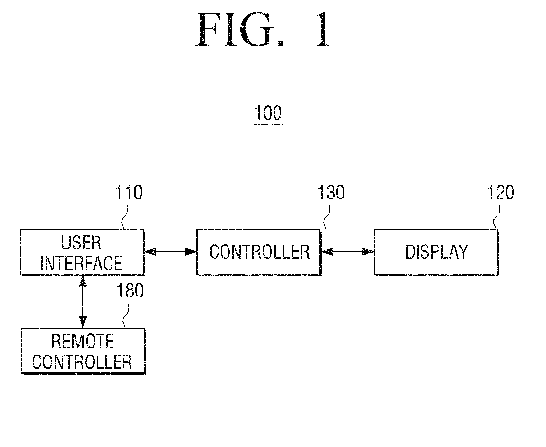

FIG. 1 is an exemplary block diagram of a display apparatus according to an exemplary embodiment. Referring to FIG. 1, a display apparatus 100 according to an exemplary embodiment may include a user interface 110, a controller 130, and a display 120, and may include various types of devices, such as a portable phone, a smart phone, a tablet PC, a laptop computer, a smart TV, an IPTV, a digital camera, and a camcorder.

The user interface 110 receives a user command. In particular, the user interface 110 receives a remote control signal that is transmitted from an external remote controller 180 and transmits the received remote control signal to the controller 130. That is, the user interface 110 receives a remote control signal that is generated when a user touches the remote controller, converts the received remote control signal into a control signal for controlling the display apparatus 100, and transmits the control signal to the controller 130.

The display 120 displays various images, and the controller 130 controls the display apparatus 100. In particular, the display 120 displays at least one category GUI and at least one content group or thumbnail screen. The category GUI may indicate a category of content that corresponds to the thumbnail screen being displayed. Further, the thumbnail screen may display an image that can inform a user of the corresponding content easily and intuitively.

Specifically, a plurality of category GUIs that indicate a plurality of categories are displayed on one side of the display 120. The user operates the remote controller to select one of the plurality of category GUIs being displayed. The operation to select one of the plurality of category GUIs may be performed by performing touch and drag with respect to a touch pad that is arranged on the remote controller. That is, if a touch signal that corresponds to the selection of the category GUI is received from the remote controller, the controller 130 operates to display the selected one of the plurality of category GUIs. Accordingly, at least one thumbnail screen that corresponds to the content included in the selected category GUI is displayed.

If one category GUI is selected, at least one content group is displayed. One content group may include at least one piece of content, and may be a folder that includes content files. In particular, at least one piece of content may be included in a content group according to a classification order. For example, content that is classified as movie may be included in a movie content group, content that is classified as a TV show may be included in a TV show content group, content that is classified as images may be included in an images content group, content that is classified as music may be included in a music content group, etc.

Each content group may display a thumbnail, which may be a representative thumbnail that indicates a common attribute of pieces of content belonging to the corresponding content group. For example, a thumbnail screen that corresponds to the movie content group may display a thumbnail that enables a user to intuitively recognize as the content regarding movie, such as a famous movie poster.

The controller 130 may control a selected GUI to be positioned on one of at least one thumbnail screen according to a user command. For example, the controller 130 may control a selected GUI to be overlaid on the thumbnail or on the thumbnail screen. The selected GUI may display that one of at least one content group is selected to the user. The selected GUI may display the selected content group screen with a size that is larger than the size of other content group screens or in a manner that the selected content group screen is emphasized in various ways, such as a bold-outlined screen.

The controller may operate to successively display thumbnails that correspond to a plurality of pieces of content on one selected content group screen. That is, if the selected GUI is positioned on a first content group screen, a plurality of thumbnails that correspond to the plurality of pieces of content included in a first content group are successively displayed on the first content group screen according to a predetermined order. The predetermined order may be variously determined to include an update time of content and preference for content.

Thereafter, if one thumbnail is selected, the controller 130 may operate to automatically execute the content that corresponds to the selected thumbnail. That is, if a selection signal is received from the user interface 110 in a state where the content group screen, on which the selected GUI is positioned, displays a first thumbnail, the controller 130 may automatically execute the content that corresponds to the first thumbnail. The content that corresponds to the selected first thumbnail may be displayed on the entire screen of the display 120.

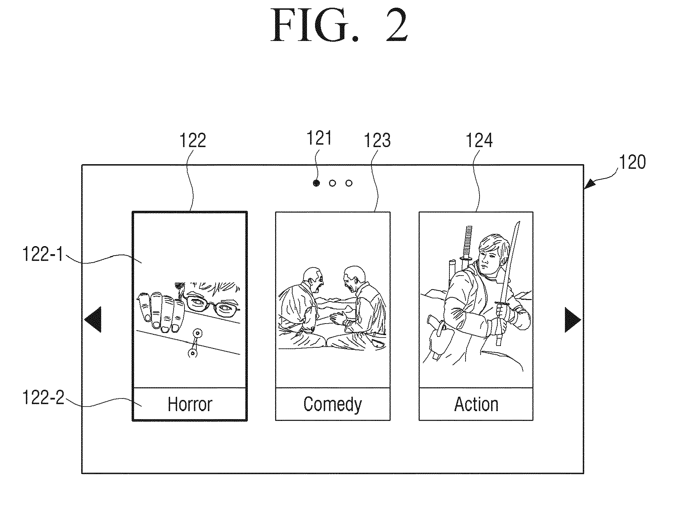

FIGS. 2 to 4 are exemplary diagrams of a display screen according to an exemplary embodiment.

FIG. 2 illustrates a case where a first category GUI 121 is selected. Referring to FIG. 2, the display 120 displays at least one category GUI and at least one content group screen. The selected first category GUI 121 may be displayed to be distinct from the GUIs corresponding to other categories, i.e., non-selected GUIs.

If the first category GUI 121 is selected, the controller 130 operates to display a plurality of content group screens. Here, it is assumed that the selected first category GUI 121 is a movie category. As illustrated in FIG. 2, a plurality of content group screens included in the movie category may be displayed, and a plurality of content groups may be classified according to movie genres. Accordingly, the displayed content groups in the movie category may be displayed according to the classification order, such as horror, comedy, and action.

The content group screen 122 may include a thumbnail screen and a content genre screen. As illustrated in FIG. 2, a first thumbnail screen 122-1 displays a representative thumbnail of at least one piece of content included in the first content group. Further, a first content genre screen 122-2 displays the genre of at least one piece of content included in the first content group as text. This will now be described in detail.

The thumbnail screen may display an image that represents the genre of the corresponding content as a representative thumbnail. The representative thumbnail may be a thumbnail that corresponds to the content having the earliest update time or the content having the highest preference in the corresponding content group. Accordingly, as illustrated in FIG. 2, on the first thumbnail screen 122-1, the first representative thumbnail that is a thumbnail corresponding to the content having the highest preference among the pieces of content included in the first content group is displayed. In the same manner, on a second thumbnail screen, a second representative thumbnail that is a thumbnail corresponding to the content having the highest preference among the pieces of content included in a second content group is displayed on a second content group screen 123.

On one side of each content group screen, a content genre screen explaining the genre of the corresponding content group may be formed. Accordingly, as illustrated in FIG. 2, at a lower end of the first content group screen 122, the first content genre screen 122-2 is formed, and the text "Horror" is displayed. In the same manner, at a lower end of a second content group screen 123, a second content genre screen is formed, and the text "Comedy" is displayed. At a lower end of a third second content group screen 124, a third content genre screen is formed, and the text "Action" is displayed.

As illustrated in FIG. 2, a selected GUI is positioned on the first content group screen 122 among three content group screens. The selected GUI may indicate that one of the plurality of content groups is selected, and may display the outline of the selected content group screen with a bold line. In addition, the selected GUI may display the selected content group screen in various ways, such as with a size that is larger than the size of the remaining content group screens. If the user interface 110 receives a remote control signal that corresponds to the movement of the selected GUI, the selected GUI may move from the first content group screen 122 to the second content group screen 123.

Hereinafter, the first content group screen 122 in the case where the selected GUI is positioned on the first content group screen 122 will be described.

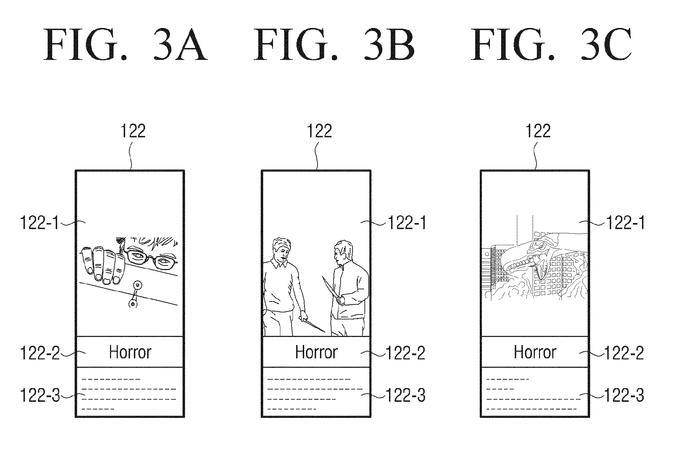

FIGS. 3A to 3C illustrate a case where the selected GUI is positioned on the first content group screen 122.

Referring to FIG. 3A, in a state where the selected GUI is positioned on the first content group screen 122, the first thumbnail screen 122-1 displays the first thumbnail. The first thumbnail may be a thumbnail that corresponds to the first content included in the first content group. Further, the text "Horror" is displayed on the first content genre screen 122-2.

The content group screen may further include a content information screen 122-3. The content information screen may display the explanation of the content that corresponds to the thumbnail displayed on the thumbnail screen as a text. That is, the content information screen may display information on the content that corresponds to the displayed thumbnail, for example, various kinds of information, such as a release day, a production day, a production company, a history, and a grade point, as a text.

If the selected GUI is continuously positioned on the first content group screen 122 without movement, the first content group screen 122 is displayed as shown in FIG. 3B. For example, each instance of displaying the GUI at a certain position, i.e., certain thumbnail or thumbnail screen, may be associated with a timer. That is, referring to FIG. 3B, if the selected GUI is positioned on the first content group screen 122 for a predetermined time or longer, the first thumbnail screen 122-1 displays a second thumbnail that is a thumbnail corresponding to second content instead of the first thumbnail. That is, the first thumbnail screen 122-1 displays the first thumbnail and the second thumbnail in a sliding manner. In this case, since the second content is included in the first content group, the text "Horror" is displayed on the first content genre screen 122-2. Further, on a first content information screen 122-3 that is formed at a lower end of the first content genre screen 122-2, explanation or information on the second content is displayed as a text.

If the selected GUI is continuously positioned on the first content group screen 122 without movement, the first content group screen 122 is displayed as shown in FIG. 3C. That is, referring to FIG. 3C, if the selected GUI is positioned on the first content group screen 122 for a predetermined time, the first thumbnail screen 122-1 displays a third thumbnail that is a thumbnail corresponding to third content instead of the second thumbnail. That is, the first thumbnail screen 122-1 displays the second thumbnail and the third thumbnail in a sliding manner. In this case, since the third content is included in the first content group, the text "Horror" is displayed on the first content genre screen 122-2. Further, on a first content information screen 122-3 that is formed at a lower end of the first content genre screen 122-2, explanation or information on the third content is displayed as a text.

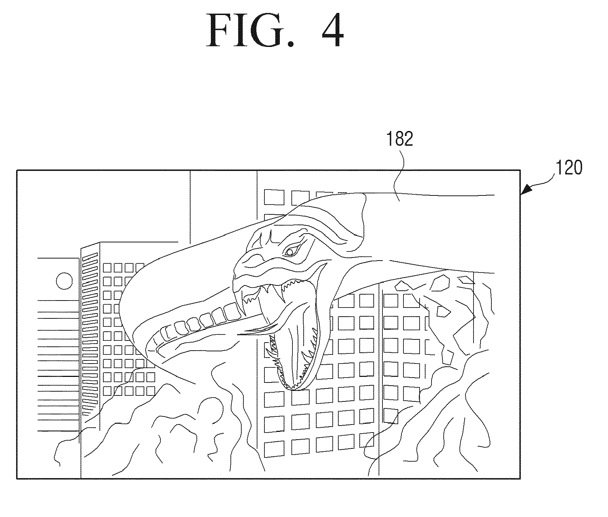

If the user interface 110 receives a selection signal from the remote controller in a state where the first content group screen 122 is displayed as shown in FIG. 3C, the display 120 becomes in a state as shown in FIG. 4. That is, the user interface 110 may receive the selection signal in a state where the first thumbnail screen 122-1 displays the third thumbnail corresponding to the third content 182. The controller 130 recognizes the received selection signal as a signal for selecting the third thumbnail, and selects the third content that is content corresponding to the third thumbnail. Accordingly, the third content may be executed and displayed on the display 120.

For example, the controller 130 may control the GUI to be overlaid on the first, second, and/or third thumbnail or corresponding thumbnail screens.

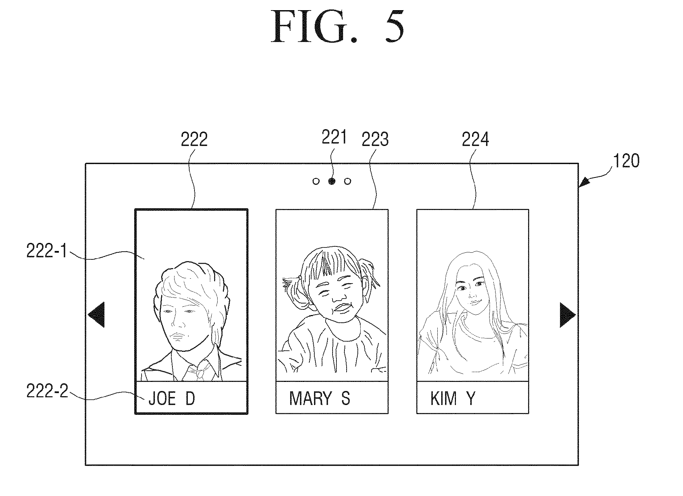

FIGS. 5 to 7 are exemplary diagrams of a display screen according to an exemplary embodiment. According to an exemplary embodiment, a plurality of categories may include SNS categories. Hereinafter, explanation of the duplicate contents will be omitted.

Referring to FIG. 5, the user interface 110 receives a remote control signal for selecting a second category GUI 221. Accordingly, the category GUI moves from the first category GUI 121 to the second category GUI 221, and the display 120 displays a content group screen included in the second category.

If the second category GUI 221 is selected, the controller 130 operates to display a plurality of SNS group screens. Here, it is assumed that the selected second category 221 is an SNS category. As illustrated in FIG. 5, the plurality of SNS group screens included in the SNS category are displayed, and the plurality of SNS groups may be classified according to users. As illustrated in FIG. 5, a first SNS group 222, a second SNS group 223, and a third SNS group 224 may be SNS groups of different user accounts, e.g., Joe D, Mary S, and Kim Y. One SNS group may include at least one SNS item. The SNS item may include various kinds of information, such as a text, an image, and a file uploaded by the user.

The SNS group screen may include a thumbnail screen and a user information screen. As illustrated in FIG. 5, the first thumbnail screen 222-1 displays a representative thumbnail of the first SNS group. The representative thumbnail may be a user's image for the first SNS group. Further, a first user information screen 222-2 may display user name, title, nickname, and other designations of the first SNS group as a text. The same display operation is performed even with respect to a second SNS group screen 223 and a third SNS group screen 224.

FIG. 5 illustrates a case where the selected GUI is positioned on the first SNS group screen 222. If the selected GUI is positioned on the first SNS group screen 222 for a predetermined time, the first thumbnail screen 222-1 may successively display different thumbnails one by one. For example, the first thumbnail screen 222-1, on which the selected GUI is positioned for the predetermined time, may display a thumbnail corresponding to the SNS item having the earliest upload time or a thumbnail corresponding to the SNS item having the highest preference among the SNS items included in the first SNS group.

Specifically, if the selected GUI is positioned on the first SNS group screen 222 in a state where the first thumbnail screen 222-1 displays the first representative thumbnail, the first thumbnail screen 222-1 may successively display a first thumbnail, a second thumbnail, and a third thumbnail one by one at predetermined time intervals. The first thumbnail may be a thumbnail that corresponds to the first SNS item, the second thumbnail may be a thumbnail that corresponds to the second SNS item, and the third thumbnail may be a thumbnail that corresponds to the third SNS item. Further, the thumbnail screen may display the thumbnail corresponding to the SNS item having the earliest upload time or the thumbnail corresponding to the SNS item having the highest preference among the plurality of SNS items included in one SNS group.

Hereinafter, a case where the first SNS group screen 222 on which the selected GUI is positioned is selected will be described.

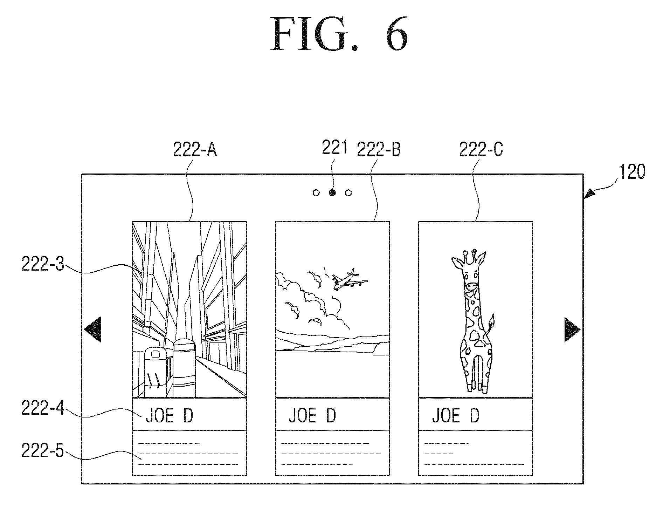

FIG. 6 illustrates a case where the first SNS group screen 222 is selected, and in this case, a plurality of SNS items is displayed in the order of their early upload time.

Specifically, in a state where the selected GUI is positioned on the first SNS group screen 222 and the first thumbnail screen 222-1 displays the first thumbnail, the user interface 110 receives a selection signal. The controller 130 operates to display a first SNS item screen 222-A that is an SNS item screen corresponding to the first thumbnail. Here, since the controller 130 displays the SNS item screens in the order of upload time of the plurality of SNS items, the controller 130 displays the SNS items in the order of the second SNS item having an upload time that is later than the upload time of the first SNS item and the third SNS item having an upload time that is later than the upload time of the second SNS item. Accordingly, as illustrated in FIG. 6, the display 120 may display the SNS item screens in the order of the first SNS item screen 222-A, a second SNS item screen 222-B, and a third SNS item screen 222-C. If the user interface 110 receives the selection signal in a state where the first thumbnail screen 222-1 displays the second thumbnail, the display 120 may display the SNS item screens in the order of the second SNS item screen 222-B, the third SNS item screen 222-C, and a fourth SNS item screen (not illustrated).

The SNS item screen may include a thumbnail screen 222-3, a user information screen 222-4, and a text screen 222-5. The thumbnail screen and the user information screen are described above. The text screen 222-5 may display information on the corresponding SNS item as a text. For example, the text screen 222-5 may display the text that the user uploads from the corresponding SNS item and the text that another user uploads.

If the user interface 110 receives the selection signal in a state where the selected GUI is positioned on one of the plurality of SNS item screens, the SNS item on which the selected GUI is positioned may be displayed on the entire screen.

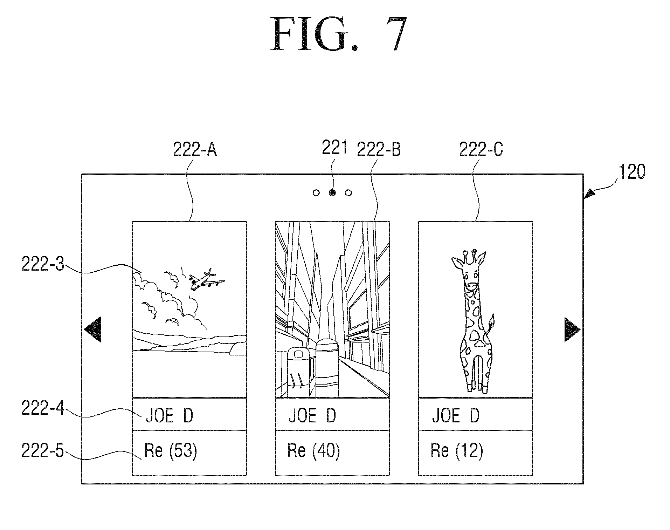

FIG. 7 illustrates a case where the first SNS group screen 222 is selected, and in this case, a plurality of SNS items is displayed in the order of their preference, from high to low. Hereinafter, explanation of the duplicate contents will be omitted.

Specifically, in a state where the selected GUI is positioned on the first SNS group screen 222 and the first thumbnail screen 222-1 displays the first thumbnail, the user interface 110 receives a selection signal. The controller 130 operates to display the first SNS item screen 222-A that is an SNS item screen corresponding to the first thumbnail. Here, since the controller 130 displays the SNS item screens in the order of preference of the plurality of SNS items, the controller 130 displays the SNS items in the order of the second SNS item having the preference that is lower than the preference of the first SNS item and the third SNS item having the preference that is lower than the preference of the second SNS item. Accordingly, as illustrated in FIG. 7, the display 120 may display the SNS item screens in the order of the first SNS item screen 222-A, the second SNS item screen 222-B, and the third SNS item screen 222-C. If the user interface 110 receives the selection signal in a state where the first thumbnail screen 222-1 displays the second thumbnail, the display 120 may display the SNS item screens in the order of the second SNS item screen 222-B, the third SNS item screen 222-C, and the fourth SNS item screen (not illustrated).

The SNS item screen may include a thumbnail screen, a user information screen, and a preference screen 222-5. The thumbnail screen and the user information screen are described above. The preference screen 222-5 may display preference information on the corresponding SNS item. For example, the preference screen 222-5 may display information on the number of texts uploaded by another user from the corresponding SNS item as a figure or a text.

If the user interface 110 receives the selection signal in a state where the selected GUI is positioned on one of the plurality of SNS item screens, the SNS item on which the selected GUI is positioned may be displayed on the entire screen.

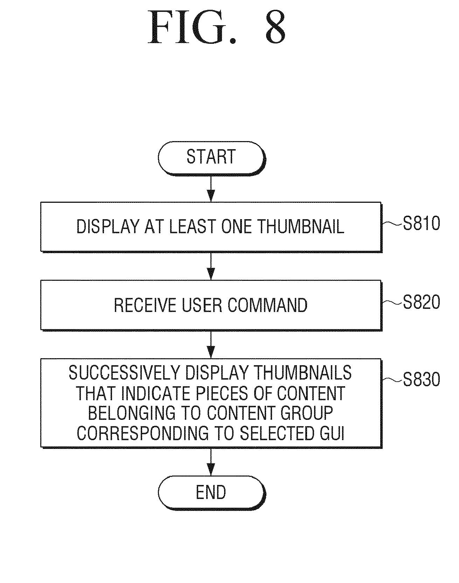

FIG. 8 is an exemplary flowchart illustrating a method for controlling a display apparatus according to an exemplary embodiment.

The display 120 displays at least one category GUI and at least one content group screen. The display 120 displays at least one thumbnail that indicates at least one content group (operation S810). The category GUI may indicate a category of content that corresponds to a displayed thumbnail screen. Further, the thumbnail screen may display an image that can inform a user of the corresponding content easily and intuitively.

The user interface 110 receives a user command (operation S820). That is, the user interface 110 receives a control signal for controlling the display apparatus 100, a touch signal, and a remote control signal and transmits the received signals to the controller 130.

The controller 130 may control the selected GUI to be positioned on one of at least one thumbnail screen according to a user command. The selected GUI may display that one of the at least one content group is selected to the user.

If the selected GUI is positioned on one of the at least one thumbnail according to the user command, thumbnails that indicate a plurality of pieces of content belonging to a corresponding content group are successively display (operation S830). The controller 130 may operate to successively display the respective thumbnails that correspond to the plurality of pieces of content on the one selected content group screen. That is, if the selected GUI is positioned on the first content group screen, the plurality of thumbnails that correspond to the plurality of pieces of content included in the first content group are successively displayed on the first content group screen according to a predetermined order. The predetermined order may be variously determined to include an update time of the content and preference for the content.

Thereafter, if one thumbnail is selected, the controller 130 may operate to automatically execute the content that corresponds to the selected thumbnail. That is, if a selection signal is received from the user interface 110 in a state where the content group screen, on which the selected GUI is positioned, displays the first thumbnail, the controller 130 may automatically execute the content that corresponds to the first thumbnail. The content that corresponds to the selected first thumbnail may be displayed on the entire screen of the display 120.

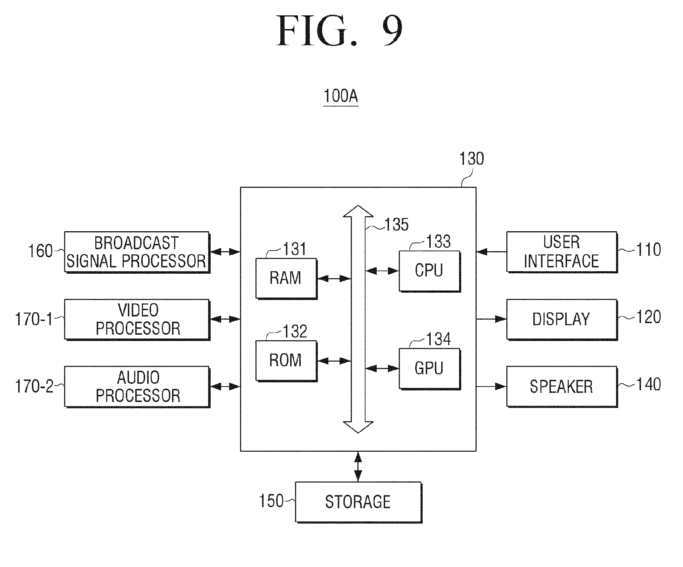

FIG. 9 is an exemplary block diagram of a display apparatus according to an exemplary embodiment.

Referring to FIG. 9, a display apparatus 100A according to an exemplary embodiment includes a user interface 110, a display 120, a storage 150, a controller 130, a speaker 140, a broadcast signal processor 160, a video processor 170-1, and an audio processor 170-2. Hereinafter, explanation of the duplicate contents as described above will be omitted.

The user interface 110 receives a remote control signal that is transmitted from an external remote controller and transmits the received remote control signal to the controller 130. The remote control signal includes all signals received from the remote controller. The remote controller outputs and transmits the remote control signal to the user interface 110 of the display apparatus 100A, and the user interface 110 transmits the received remote control signal to the controller 130.

The display 120 displays various images. The display 120 may include various types of displays, such as a Liquid Crystal Display (LCD), an Organic Light Emitting Diode (OLED) display, and a Plasma Display Panel (PDP). In the display 120, a driving circuit that may include an amorphous silicon (a-si) thin film transistor (TFT), a Low Temperature Poly Silicon (LTPS) TFT, and an Organic TFT (OTFT), and a backlight unit may be included.

The broadcast signal processor 160 receives a broadcast signal and converts the received broadcast signal into video data, audio data, and other data. If the broadcast signal is received, the broadcast signal processor 160 performs signal processes, such as demodulation, equalization, demultiplexing, deinterleaving, and decoding, with respect to the received broadcast signal, and generates video frames and audio signals. The generated video frames are provided to the display 120, and the generated audio signals are provide to the speaker 140.

The video processor 170-1 processes video data included in the broadcast signal that is received through the broadcast signal processor 160. The video processor 170-1 may perform various image processes, such as decoding, scaling, noise filtering, frame rate conversion, and resolution conversion, with respect to the video data. The display 120 may display image frames generated by the video processor 170-1.

The audio processor 170-2 processes audio data included in the broadcast signal that is received through the broadcast signal processor 160. The audio processor 170-2 may perform various processes, such as decoding, amplification, and noise filtering, with respect to the audio data.

The speaker 140 converts the audio data processed by the audio processor 170-2 into user voice or other sound and outputs the converted user voice or other sound.

The controller 130 controls the entire operation of the display apparatus 100A using various kinds of programs and data stored in the storage 150. The controller 130 includes a RAM 131, a ROM 132, a CPU 133, a GPU 134, and a bus 135. The RAM 131, ROM 132, CPU 133, and GPU 134 may be connected to each other through the bus 135.

The CPU 133 accesses the storage 150, and performs booting using an operating system (OS) stored in the storage 150. Further, the CPU 133 performs various operations using various kinds of programs, content, and data stored in the storage 150. Further, the CPU 133 determines an operating mode of the display apparatus 100A, and extracts a function menu that corresponds to a received touch signal.

A command set for system booting is stored in the ROM 132. If a power is supplied through an input of a turn-on command, the CPU 133 copies the OS that is stored in the storage 150 into the RAM 131 according to a command stored in the ROM 132, and boots the system through execution of the OS. If the booting is completed, the CPU 133 copies various kinds of programs stored in the storage 150 into the RAM 131, and performs various kinds of operations through execution of the programs copied into the RAM 131.

If the booting of the display apparatus 100A is completed, the GPU 134 displays an image. Specifically, the GPU 134 may generate a screen that includes various objects, such as an icon, an image, and text, using an operator (not illustrated) and a renderer (not illustrated). The operator broadcast operates attribute values, such as coordinate values, shapes, sizes, and colors of the objects, according to a layout of the screen. The renderer broadcast generates various layout screens including the objects based on the attribute values operated by the operator broadcast. The screen that is generated by the renderer broadcast is provided to the display 120, and is displayed in the display region.

The method for controlling a display apparatus according to various exemplary embodiments as described above may be stored as program instructions or code in a non-transitory computer-readable storage medium. The non-transitory computer-readable storage medium may be mounted on various devices to be used.

As an example, a program code for performing the method for controlling a display apparatus, which includes displaying at least one thumbnail that indicates at least one content group, receiving a user command, and successively displaying thumbnails that indicate a plurality of pieces of content belonging to the corresponding content group when a selected GUI is positioned on one of the at least one thumbnail according to the user command, may be stored and provided in the non-transitory computer-readable storage medium.

The non-transitory computer-readable storage medium is not a medium that stores data for a short period, such as a register, a cache, or a memory, but means a medium which semi-permanently stores data and is readable by a device. Specifically, the non-transitory computer-readable storage medium may be a CD, a DVD, a hard disc, a Blu-ray disc, a USB, a memory card, or a ROM.

The described-above exemplary embodiments and advantages are merely exemplary and are not to be construed as limiting. The present teaching can be readily applied to other types of apparatuses. The description of exemplary embodiments is intended to be illustrative, and not to limit the scope of the claims, and many alternatives, modifications, and variations will be apparent to those skilled in the art.

## Claims

1. A display apparatus comprising:
a display configured to display at least one thumbnail image that indicates a corresponding content group;
a user interface configured to receive a user command; and
a controller configured to operate to successively display thumbnails that indicate a plurality of pieces of content belonging to the corresponding content group when a first graphical user interface (GUI) is positioned on the at least one thumbnail image according to the user command.

2. The display apparatus as claimed in claim 1, wherein, if one of the thumbnails that indicate the plurality of pieces of content belonging to the content group is selected while the thumbnails are successively displayed, the controller is arranged to operate to automatically execute content, of the plurality of pieces of content, that corresponds to the selected thumbnail.

3. The display apparatus as claimed in claim 1 or 2, wherein the controller is arranged to operate to display a plurality of second GUIs that indicate a plurality of categories on one side of a screen, and if one of the plurality of second GUIs is selected, the controller is arranged to operate to display thumbnail images that indicate corresponding content groups belonging to the category that corresponds to a selected second GUI.

4. The display apparatus as claimed in claim 3, wherein the plurality of categories comprises Social Network Service (SNS) categories.

5. The display apparatus as claimed in any one of claims 1 to 4, wherein if the first GUI is positioned on the at least one thumbnail image according to the user command, the controller is arranged to operate to successively display the thumbnails that indicate the plurality of pieces of content belonging to the corresponding content group according to a preset order.

6. The display apparatus as claimed in claim 5, wherein the preset order is at least one of an update time of the plurality of pieces of content and preference for the plurality of pieces of content.

7. The display apparatus as claimed in any one of claims 1 to 6, wherein the controller is arranged to operate to display the at least one thumbnail image that indicates the corresponding content group together with content information that corresponds to the displayed thumb nail image.

8. The display apparatus as claimed in any one of claims 1 to 7, wherein the thumbnail image that indicates the corresponding content group is a representative thumbnail that indicates a common attribute of the plurality of pieces of content belonging to the corresponding content group.

9. A method for controlling a display apparatus, comprising:
displaying at least one thumbnail image that indicates a corresponding content group;
receiving a user command; and
successively displaying thumbnails that indicate a plurality of pieces of content belonging to the corresponding content group when a first graphical user interface (GUI) is positioned on the at least one thumbnail image according to the user command.

10. The method as claimed in claim 9, further comprising:
if one of the thumbnails that indicate the plurality of pieces of content belonging to the corresponding content group is selected while the thumbnails are successively displayed, automatically executing content, of the plurality of pieces of content, that corresponds to a selected thumbnail.

11. The method as claimed in claim 9 or 10, further comprising:
displaying a plurality of second GUIs that indicate a plurality of categories on one side of a screen; and
if one of the plurality of second GUIs is selected, displaying the thumbnails that indicate corresponding content groups belonging to the category that corresponds to a selected second GUI.

12. The method as claimed in claim 11, wherein the plurality of categories comprises Social Network Service (SNS) categories.

13. The method as claimed in any one of claims 9 to 12, wherein the successively displaying the thumbnails comprises:
if the first GUI is positioned on the at least one thumbnail image according to the user command, successively displaying the thumbnails that indicate the plurality of pieces of content belonging to the corresponding content group according to a preset order.

14. The method as claimed in claim 13, wherein the preset order is at least one of an update time of the plurality of pieces of content and preference for the plurality of pieces of content.

15. The method as claimed in any one of claims 9 to 14, wherein the displaying the at least one thumbnail image comprises:
displaying the at least one thumbnail image that indicates the corresponding content group together with content information that corresponds to the displayed thumbnail image.
